# EUROPEAN PATENT SPECIFICATION

(11) **EP 2 454 188 B1**
(45) Date of publication and mention of the grant of the patent: **03.06.2020**
(21) Application number: 10726111.7
(22) Date of filing: 25.06.2010
(51) Int. Cl.: C01B 3/04, C01B 3/34

(54) **APPARATUS FOR PRODUCING GASEOUS HYDROGEN AND ENERGY GENERATION SYSTEM UTILISING SUCH APPARATUS**
VORRICHTUNG ZUR HERSTELLUNG VON GASFÖRMIGEM WASSERSTOFF UND ENERGIEERZEUGUNGSSYSTEM MIT DIESER VORRICHTUNG
APPAREIL POUR LA PRODUCTION D'HYDROGÈNE GAZEUX ET SYSTÈME DE PRODUCTION D'ÉNERGIE UTILISANT UN TEL APPAREIL

(30) Priority: 14.07.2009 IT MI20091249
(43) Date of publication of application: 23.05.2012
(73) Proprietor: Sonolis S.R.L., 20059 Vimercate (MI) (IT)
(72) Inventor: GARGIUOLO, Francesco, I-20059 Vimercate (MI) (IT); ROSSATO, Gabriele, I-20059 Vimercate(MI) (IT); SALA, Davide, I-20059 Vimercate (MI) (IT); SALA, Giovanni, I-20059 Vimercate (MI) (IT); BRIOSCHI, Maurizio, Egidio, I-20059 Vimercate (MI) (IT); LIMONTA, Alberto, I-20059 Vimercate (MI) (IT)
(74) Representative: Cammareri, Emanuele
(86) International application number: PCT/EP2010/059066
(87) International publication number: WO 2011/006749

(56) References cited:
- WO-A1-2006/038048
- US-A- 4 957 610
- US-A- 5 425 332
- US-A1- 2003 136 661
- US-A1- 2005 178 670
- CALO ET AL: "Comments on ''A new gaseous and combustible form of water,'' by R.M. Santilli" INTERNATIONAL JOURNAL OF HYDROGEN ENERGY, ELSEVIER SCIENCE PUBLISHERS B.V., BARKING, GB, vol. 32, no. 9, 23 May 2007 (2007-05-23), pages 1309-1312, XP022093256 ISSN: 0360-3199
- HARADA H ED - MANICKAM SIVAKUMAR: "Sonophotocatalytic decomposition of water using TiO"2 photocatalyst", ULTRASONICS: SONOCHEMISTRY, BUTTERWORTH-HEINEMANN, GB, vol. 8, no. 1, 1 January 2001 (2001-01-01) , pages 55-58, XP004224960, ISSN: 1350-4177, DOI: 10.1016/S1350-4177(99)00050-4

## Description

### Technical field of the invention

The present invention refers to techniques for producing gaseous hydrogen, and particularly for producing hydrogen and oxygen from water. In particular, but not limitedly, the present invention refers to the production of gaseous hydrogen to employ as a fuel.

### Known art

The production of gaseous hydrogen starting from water, in order to obtain a fuel, appears to be an extremely interesting opportunity in the view of the great availability of water as compared with other types of fuel.

The electrolysis of water results the most common technique for the separation of hydrogen from oxygen. Nevertheless, the high electrical power required by electrolysis has entailed that other production techniques of hydrogen be looked for.

With regard to this, the document of Fausto Elisei et al. "Production of hydrogen from water by photolysis assisted by innovative photo-catalysts", (Eighth National Congress CIRIAF - Acts (Perugia 4 - 5 April 2008) describes the use of a technique based on the photolysis and also refers to an experimental sonolysis equipment.

WO 2006/038048 discloses a method of obtaining hydrogen from water employing a microwave energy source an a high voltage catalyst chamber.

### Brief summary of the invention

The Applicant has observed that the production modes of gaseous hydrogen in the known art are not satisfactory, both in terms of efficiency and in terms of practical feasibility of a corresponding apparatus.

The aim of the present invention is to propose an apparatus for producing gaseous hydrogen from water, alternative to those of the known art, and which for instance overcomes the limitations of the presently known techniques.

Scope of the present invention is therefore an apparatus for producing gaseous hydrogen from water as described in Claim 1 and from its preferred embodiments described in the dependent Claims 2-5.

Scope of the invention is also an energy generation system as defined in Claim 6 and one of its particular embodiments described in Claim 7.

### Brief description of the drawings

Further characteristics and advantages of the invention will result from the following description of a preferred embodiment and its variations, given in an exemplifying way with reference to the appended drawings, in which:
FIG. 1 shows a cross-section, according to a longitudinal plane, of a first stage of an example of an apparatus for producing gaseous hydrogen;
FIG. 2 shows a cross-section, according to a longitudinal plane, of an example of a second stage of said apparatus for producing gaseous hydrogen;
FIG. 3 shows schematically an energy generation system, employing said apparatus for producing hydrogen;

### Detailed description

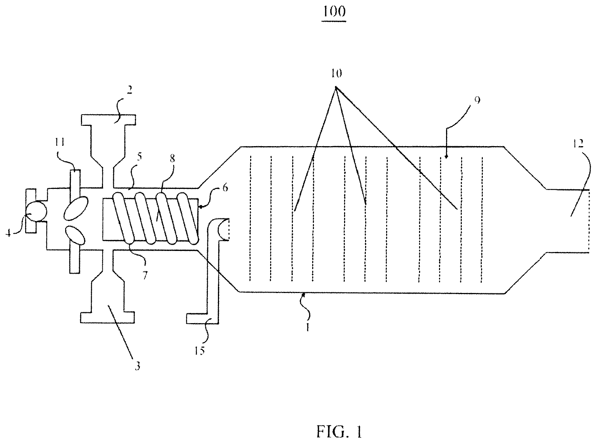

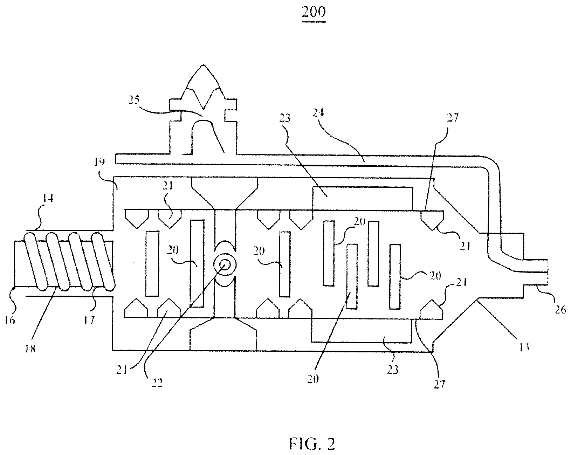

FIGG. 1 and 2 show, respectively and in cross-section, a first stage 100 and a second stage 200 of an apparatus or reactor for producing gaseous hydrogen, realized according to a particular embodiment of the invention.

The first stage 100 comprises a container 1 provided with one or more inputs for water. For instance, the container 1 is made of steel and particularly of AISI 361 L steel and can have a thickness of one millimetre. The water inputs are realized, preferably, by a first group of electro-injectors 2, and optionally by a second group of electro-injectors 3. Such electro-injectors are advantageously of the low pressure type, and provide for the atomization of the water at the inlet on a plurality of jets (for instance, four jets). According to a particular example, the inlet pressure varies between 1 Bar and 5 Bar. The first group of electro-injectors 2 is controlled in a synchronous way with respect to the second group of electro-injectors 3 by an electronic control unit (not shown) which also provides for the cyclic regulation of the injection times.

The first stage 100 is also provided, at a first extreme, with an acoustic-wave generator 4 suitable for inducing acoustic waves in the water which comes out in an atomized form from the electro-injector groups 2 and 3, to produce sonolysis. In particular, the acoustic-wave generator 4 has the shape of an ultrasonic transducer.

According to an example, such ultrasonic transducer 4 comprises nine circular piezoelectric actuators of a diameter comprised between 5 and 45 millimetres in a SONOX P4 or PZT ceramic with an atomizing capacity comprised between 500 ml/h and 2000 ml/h, controlled with a power comprised between 2 and 50 Watt and modulated with a frequency comprised between 15 kHz and 35 kHz. It should be noted that the ultrasonic transducer is capable of generating a phenomenon of water cavitation, by transforming it in "cold" steam with running temperatures comprised between 30 and 80°C.

According to the example shown in FIG. 1, in a peripheral chamber 5 (of tubular shape) of the container 1 a heater 6 is included, as in particular an induction heater, comprising an electric coil 7 (for instance made of copper) wound on a core 8. The induction heater 6 is capable to work at a frequency comprised between 100 kHz and 260 kHz on a core 8 made of soft iron which heats by an inductive effect at 700-800°C consuming 400/500 Watt. The heater 6 has the task to vaporize the water and transform it in dry steam.

According to the embodiment shown in FIG. 1, an electromagnetic radiation source 11, configured to cause photolysis, is disposed inside the peripheral chamber 5 proximate to the ultrasonic transducer 4.

The electromagnetic radiation source 11 comprises, advantageously, a laser, for instance a solid-state laser with an employed power between 5 mW and 200 mW and an emission wavelength comprised between 200 nm and 880 nm, and which works also in the visible field.

A central region of the container 1 is provided with an electrolytic generation device 9 (i.e. a device suitable to cause electrolysis). Such device 9 is, advantageously, highly efficient and comprises a plurality of electrolytic cells 10, for instance at high voltage (HT), which cause electrolysis in the steam which passes through them in expansion and acceleration. According to a preferred case, such electrolytic cells 10 are made of nickel and tungsten and are formed by a plurality of reticular meshes made of nickel, tungsten carbide and tungsten. The electrolytic cells 10 are fed for example by a continuous voltage varying from 50 V to a maximum of 4000 V. The electrolytic generation device 9 contributes to the creation of ionized steam.

Preferably, the first stage 100 is also provided with a recovery duct 15 which opens to the inside of the container 1, such as for example, an AISI 316L steel tube, controlled by a proportional valve (not shown) for the recovery of discharge/unburnt gases of an engine and subsequently used for the stechiometric enrichment and the preheating of the grids 10. The first outlet 12, which is fitted to the second stage 200, provides that the gaseous mixture and the ionized steam formed in the first stage 100 have access to the second stage 200.

The second stage 200 (FIG. 2) comprises a respective container 13, for example analogous (also for the materials) to the container 1 described previously. An inlet mouth 14 of the second stage 200 is fitted to the first outlet 12 of the first stage 100.

Advantageously, in the inlet mouth 14 a further heater 16 is provided, comprising for example an induction heater, provided with a respective core 17 and a respective coil 18. According to an example, the induction heater 16 works at a frequency comprised between 100 kHz and 260 kHz on a soft iron core 17, which heats by an inductive effect at 200-400°C by consuming 200 Watt. The task of this heater 16 is to heat the gas after the electrolytic cells 10 and bring it back to temperature.

Inside a chamber 19 of the second stage 200 a plurality of flow separating elements 20 (for example AISI 316L steel bars) built in order to suitably channel the gas.

At the edges of the chamber 19, a plurality of electromagnetic radiation sources is fixed, comprising, according to the example, discharge lamps 22 and/or at least one LED device 21. The discharge lamps 22 are for instance discharge bulbs working at a frequency varying between 200 and 600 Hz with a wavelength comprised between 200 and 680 nm, piloted with a power of 50 Watt. For example, the LED 21 is an UV (ultraviolet) device with an emission at 250-400 nm starting from 60 mV. The flow separating elements 20 force the gas to pass by proximate to the radiation sources 21 and 22.

According to a preferred embodiment, the second stage 200 is also provided with a magnetic polarizing/separating device. According to a particular example, such magnetic polarizing/separating device comprises two facing magnets 23 (N and S) (for example with a Ni-Cu-Ni alloy) able to deliver a magnetic energy of 40 N and an attraction power of 100 Kg. To these magnets 23 are linked field diffusers 27, made for instance of a magnetic steel (for instance, of AISI 314L steel).

According to a particular example, the second stage 200 is also provided with an intake conduit 24 for suction from the outside of an ethylic comburent, gaseous comburent or ionized vapor to be fed to an outlet 26 and to be used for the starting of the engine, to which the production apparatus of gaseous hydrogen and the stechiometric maintenance/enrichment have to be connected, until reaching the running temperatures of the engine itself.

The intake duct 24 is operatively associated with a ionizing plasma generator 25 which allows the vapor or the comburent passing through the intake conduit 24 to be ionized. The plasma generator 25 permits to ionize the gaseous/liquid fuel, with a voltage of approx. 20000 V at a negative polarity and with a frequency working between 3000 Hz and 19000 Hz.

The second stage 200 is also provided with the outlet 26 for delivering the hydrogen and a gas or hybrid fuel to the engine. In some applications, ethylic alcohol in mixture with ionized vapor or in certain cases if present Propane Butane or Methane Gas could be used.

In operation, the atomized water is introduced by means of the electro-injector groups 2 and 3 to the inside of the container 1 of the first stage 100. The ultrasonic transducer 4 is actuated in order to generate acoustic waves by causing in the water a phenomenon of oscillating cavitation. It could be noted that the vibrations transmitted by the ultrasonic transducer 4 cause in the water molecule phenomena of stretching, planar deformation and internal rotation. The atomized water, thanks to the oscillating cavitation, is subjected to a first action of sonolysis, causing the formation of hydrogen at a low temperature.

This steam residing in the peripheral chamber 5 is also interested by the emissions of the laser 11, which thanks to a photolysis effect, further increases the production of hydrogen.

The gas mixed with steam is then subjected to a heating, thanks to a heat exchange with the core 8, which is warmed by the coil 7 by reaching for instance a temperature of approx. 700-800°C. According to an example, this heating contributes to the creation of hydrogen. The gaseous expansion which is created tanks to such a heating permits to the treated fluid to reach the region in which the grids 10 are present.

The grids 10 are preheated up to a suitable temperature by the exhaust gas coming from the engine and taken in inside the container 1 by means of the recovery tube 15.

The potential difference (raising towards the first outlet 12) applied to the grids 10 causes electric discharges which cause a further separation of the hydrogen (electrolysis, in this case) in the treated fluid. For example, the potential difference varies longitudinally between 50 V and 4000 V in order to compensate the lower conductivity of the fluid in proximity of the first outlet 12. The grids 10 also contribute to accelerate the gas passing through them.

The treated fluid reaches then the first outlet 12 and enters in the second stage 200. The second stage 200 has the task of keeping the gas separated and stored. The further induction heater 16 provides to increase the temperature of the fluid present in the intake mouth 14, causing, preferably, pyrolysis. By photo-pyrolysis inside the chamber 19, the LEDs 21 and the discharge lamp 22 (which emits, for instance, a light with a power of 50 W with an internal temperature of 1200°C) act on the fluid.

According to another preferred embodiment, the discharge lamp 22 emits at a wavelength comprised between 220 nm and 550 nm, and more preferably, such lamp emits at a wavelength comprised between 240 nm and 280 nm. The best results have been achieved for emission wavelengths of approx. 260 nm.

The magnetic separators 23 maintain the oxygen separated from the hydrogen and the gas is enriched with ionized vapour thanks to the influence of the plasma generator 25 and of the intake tube 24. The plasma generator 25 causes a plasma process at high voltage (HT), and, for instance, it works at a frequency comprised between 3 kHz and 19 kHz at a negative polarization from 20000 V. The gas so obtained is a ionized hydric gas suitable to be supplied to an engine burner.

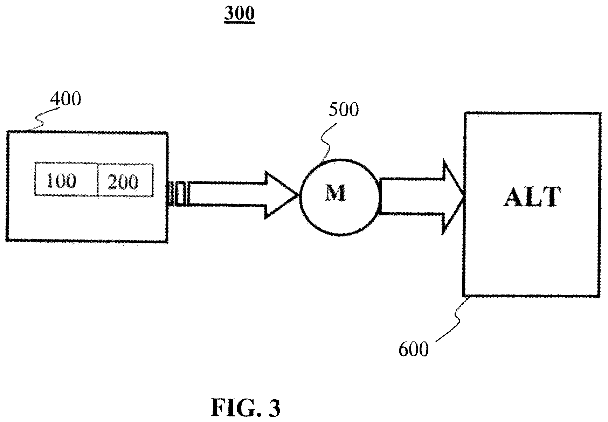

FIG. 3 shows by functional blocks a generation system of electric power 300 comprising the apparatus for producing gaseous hydrogen 400 (REACT) described above, an engine 500 (M) capable of producing a power output connected to an alternator 600 (ALT). The engine 500 is for instance of a Wankel cycle or turbine type with a produced energy, for instance between 5 and 30 kW/h.

The apparatus for producing gaseous hydrogen 400 supplies the fuel (supporter of combustion and fuel) to the engine 550 which, by making use of a burner, produce in a way evident to an expert in the field an output force which transmitted to the alternator 600 permits to generate electric energy (for instance, up to 5 kW/h).

This described example is suitable for generation energy in the domestic field, as, for instance the generation of electric current for supplying the domestic network and the generation of heat for the domestic heating. Nevertheless, the apparatus for generating gaseous hydrogen 400 conforming with the teachings of the invention can be used for thermodynamic engines, cogenerators, turbines, burners or other users.

The described apparatus for producing hydrogen is particularly advantageous. The combined action of sonolysis, photolysis and electrolysis results to be extremely efficient. Furthermore, the action of electrolysis on the steam and not, as it occurs traditionally, on the water in the liquid state brings an important efficiency of the production of gas as the Applicant could evaluate experimentally.

The maintenance of the gas in a form separated from the water, made in the second stage 200 by the combined action of heating (photo-pyrolysis), electromagnetic radiation and magnetic field has shown to be particularly advantageous.

It was determined experimentally that after many days from its production the gas obtained has not recombined itself. Furthermore, the possibility of adding a supporter of combustion by the action of the plasma generator 25 makes the apparatus for producing hydrogen immediately usable (on demand) for feeding a fuel to an engine. The fuel obtainable with the described apparatus results to be suitable for engines actually in use.

## Claims

1. A gaseous hydrogen producing apparatus (100, 200) comprising a container (1) provided with:
- an input (2, 3) for water comprising elecro-injectors configured to provide water in atomized form into the container (1) at a peripheral chamber (5) of the same;
- an acoustic-wave generator (4) suitable for inducing sonolysis in the water introduced into the container at the peripheral chamber (5);
- an electromagnetic radiation source (11) configured to induce photolysis in the water introduced into the container, disposed proximate to the acoustic-wave generator (4) into the peripheral chamber (5);
- a device adapted to induce electrolysis (9, 10) and arranged in a central region of the container (1) downstream of the acoustic-wave generator (4) and of the source of the electromagnetic radiation (11);
- a first heater (6) included in the peripheral chamber (5) and configured to vaporize the water that is introduced into the container (1) at the peripheral chamber (5) to provide corresponding vapor, wherein said device for inducing electrolysis (9, 10) is arranged so as to induce electrolysis on said vapor;
- an output for providing hydrogen in the gaseous state exiting the container.

2. An apparatus (100, 200) according to claim 1, wherein said first heater (6) is such as to 5 induce pyrolysis, and wherein the acoustic-wave generator (4), the electromagnetic radiation source, the device for inducing electrolysis and the heater are configured for the production of ionized water vapour in addition to hydrogen and starting from water.

3. An apparatus (100, 200) according to claim 1 or 2, also including a chamber (19) housing the fluid resulting from the electrolysis including hydrogen and ionized water vapour, said chamber comprising means (16, 21, 20, 22, 23, 27) to keep the hydrogen in a separate form which comprise:
- a second induction heater (16) to produce temperature increase causing pyrolysis;
- a plurality of flow separating elements (20) structured to channel the fluid;
- a plurality of electromagnetic radiation sources (21, 22) producing photo-pyrolysis;
- a magnetic polarizing/separating device (23, 27).

4. An apparatus (200) according to at least one of the preceding claims, wherein:
- said acoustic-wave generator (4) includes an ultrasound transducer with piezoelectric actuators;
- said electromagnetic radiation source (11) includes a laser device;
- said device for inducing electrolysis includes a plurality of grids (10) to which a difference in electric voltage can be applied;
- said first and second heaters respectively include an induction winding associated with a respective core to be heated.

5. An apparatus (200) according to at least claim 3, also comprising:
- an intake conduit (24) for suction of an ethylic comburent, gaseous comburent or ionized vapor;
- a ionizing plasma generator (25) operatively associated with the suction conduit (24) to provide ionized comburent or vapor.

6. A system (300) for energy generation, comprising:
an apparatus (100, 200) for the production of gaseous hydrogen;
an apparatus for utilizing said gaseous hydrogen for energy production;
**characterized in that**, said apparatus (100, 200) for producing gaseous hydrogen is realized according to at least one of the preceding claims.

7. A system according to claim 6, wherein said apparatus for utilizing said gaseous hydrogen includes at least one of the following devices: a motor, a turbine for motor energy generation, a thermodynamic motor, a cogenerator, a gas burner.

## Patentansprüche

1. Eine Vorrichtung zur Erzeugung gasförmigen Wasserstoffs (100, 200) mit einem Behälter (1), ausgestattet mit:
- einem Wassereinlass (2, 3), der Elektroeinspritzdüsen beinhaltet, welche derart gestaltet sind, dass sie Wasser in zerstäubter Form in den Behälter (1) bei einer peripheren Kammer (5) der selben zufuhren;
- einem Schallwellengenerator (4), der geeignet ist, eine Sonolyse im Wasser zu induzieren, das in den Behälter bei der peripheren Kammer (5) eingelassen wird;
- einer elektromagnetischen Strahlungsquelle (11), die derart gestaltet ist, dass sie eine Photolyse im in den Behälter eingelassenen Wasser induziert, und die nah beim Schallwellengenerator (4) in der peripheren Kammer (5) angeordnet ist;
- einer Vorrichtung zum Induzieren einer Elektrolyse (9, 10), die in einem zentralen Bereich des Behälters (1) stromabwärts des Schallwellengenerators (4) und der Quelle der elektromagnetischen Strahlung (11) angeordnet ist;
- einer ersten Heizvorrichtung (6), die in der peripheren Kämmer (5) enthalten und derart gestaltet ist, dass sie das Wasser zum Verdampfen bringt, das in den Behälter (1) bei der peripheren Kammer (5) eingelassen wird, um entsprechenden Dampf bereitzustellen, wobei die besagte Vorrichtung zum Induzieren der Elektrolyse (9, 10) so angeordnet ist, dass sie die Elektrolyse beim besagten Dampf induziert;
- einem Auslass zur Bereitstellung aus dem Behälter in gasförmigem Zustand austretenden Wasserstoffs.

2. Eine Vorrichtung (100, 200) gemäß Patentanspruch 1, wobei die erste besagte Heizvorrichtung (6) derart beschaffen ist, dass sie eine Pyrolyse induziert, und wobei der Schallwellengenerator (4), die elektromagnetische Strahlungsquelle, die Vorrichtung zum Induzieren einer Elektrolyse und die Heizvorrichtung sämtlich zur Erzeugung ionisierten Wasserdampfs gestaltet sind, zusätzlich zu Wasserstoff sowie auf der Grundlage von Wasser.

3. Eine Vorrichtung (100, 200) gemäß Patentanspruch 1 oder 2, die zudem eine Kammer (19) beinhaltet, in der das aus der Elektrolyse resultierende Fluid, das Wasserstoff und ionisierten Wasserdampf enthält, untergebracht ist, wöbei die besagte Kammer Vorrichtungen (16, 21, 20, 22, 23, 27) aufweist, um den Wasserstoff in einer separaten Form zu halten, die Folgendes einschließen:
- eine zweite Induktionsheizvorrichtung (16) zur Erzeugung einer Temperatursteigerung, die eine Pyrolyse bewirkt)
- eine Vielzahl von Strömungstrennelementen (20), die so gestaltet sind, dass sie das Fluid kanalisieren;
- eine Vielzahl elektromagnetischer Strahlungsquellen (21, 22), die eine Photopyrolyse bewirken;
- eine magnetische Polarisierungs-/Trennvorrichtung (23, 27).

4. Eine Vorrichtung (200) gemäß mindestens einem der vorausgehenden Patentansprüche, bei welcher:
- der besagte Schallwellengenerator (4) einen Ultraschallwandler mit piezoelektrischen Betätigungselementen einschließt;
- die besagte elektromagnetische Strahlungsquelle (11) eine Laser-Vorrichtung umfasst;
- die besagte Vorrichtung zum induzieren der Elektrolyse eine Vielzahl von Gittermaschen umfasst (10), an die eine elektrische Spannungsdifferenz angelegt werden kann;
- die besagte erste und zweite Heizvorrichtung jeweils eine Induktionswicklung beinhalten, die jeweils einem zu beheizenden Kern zugeordnet ist.

5. Eine Vorrichtung (200) mindestens gemäß Patentanspruch 3, die außerdem umfasst:
- eine Einlassleitung (24) zum Ansaugen eines ethylischeh Brennmittels, eines gasformigen Brennmittels oder ionisierten Dampfes;
- einen ionisierenden Plasmagenerator (25), der operativ mit der Ansaugleitung (24) verbunden ist, um ionisiertes Brennmittel bzw. Dampf bereitzustellen.

6. Ein System (300) zur Energieerzeugung, bestehend aus:
- einer Vorrichtung (100, 200) zur Erzeugung von gasformigem Wasserstoff;
- einer Vorrichtung zur Nutzung des besagten gasförmigen Wasserstoffs zu Energieerzeugungszwecken, **gekennzeichnet durch** den Umstand, dass die besagte Vorrichtung (100, 200) zur Erzeugung gasförmigen Wasserstoffs gemäß mindestens einem der vorstehenden Patentansprüche aufgebaut ist.

7. Ein System gemäß Patentanspruch 6, wobei die besagte Vorrichtung zur Nutzung des besagten gasförmigen Wasserstoffs mindestens eine der folgenden Vorrichtungen beinhaltet: einen Motor, eine Turbine zur Motorenergieerzeugung, einen thermodynamischen Motor, einen Kogenerator, einen Gasbrenner.

## Revendications

1. L'appareil qui produit hydrogène gazeux (100, 200) comprenant un conteneur fourni avec :
- Une entrée (2, 3) pour l'eau comprenant électro-injecteurs configurés pour fournir l'eau sous forme atomisée dans le conteneur (1) à la chambre périphérique du même
- Un générateur des ondes acoustiques (4) approprié pour l'introduction de sonolyse dans l'eau introduite dans le conteneur à la chambre périphérique (5) ;
- Une source de radiation électromagnétique (11) configurée pour induire la photolyse dans l'eau introduite dans le conteneur, disposée près du générateur des ondes acoustiques (4) dans la chambre périphérique (5) ;
- Un appareil adapté à induire l'électrolyse (9, 10) placé en succession au générateur des ondes acoustiques (4) et à la source de radiation électromagnétique (11)
- Un premier chauffage (6) compris dans la chambre périphérique (5) et configuré pour vaporiser l'eau introduite dans le conteneur à la chambre périphérique (5) pour y fournir vapeur, où l'appareil pour induire électrolyse (9, 10) est configuré pour induire l'électrolyse de la vapeur produite
- Une sortie pour fournir hydrogène en forme gazeuse sortant du conteneur

2. un appareil (100, 200) selon la définition 1, où le surnommé premier chauffage (6) est de type à induire pyrolyse, et où le générateur des ondes acoustiques (4), la source des radiations électromagnétiques, l'appareil pour induire l'électrolyse et le chauffage sont configurés pour la production des gaz suivants : gaz de Brown, vapeur d'eau ionisée, en plus de l'hydrogène produit de l'eau

3. un appareil (100, 200) selon les définitions 1 ou 2 comprenant aussi une chambre (19) où accueillir un fluide produit par l'électrolyse, y compris hydrogène et la vapeur de l'eau ionisée, cette chambre comprenant moyens (16, 21, 20, 22, 23, 27) pour maintenir l'hydrogène et vapeur d'eau ionisée séparés
Un second chauffage (16) inductif pour produire le haussement de température qui cause la pyrolyse ;
D'éléments séparateurs (20) pour canaliser les fluides
D'autres sources des radiations électromagnétiques (21, 22) qui produisent pyrolyse;
Un appareil de polarisation/séparation magnétique (23, 27)

4. Un appareil (200) selon l'une des définitions précédentes où :
Le surnommé générateur des ondes électromagnétiques (4) comprend un transducteur à ultrasons avec un actionneur piézoélectrique
La surnommée source de radiations électromagnétiques (11) comprends un dispositif laser ;
Le surnommé appareil pour induire l'électrolyse comprend plusieurs grilles où appliquer une différence du potentiel électrique ;
Les surnommés premier et second chauffages comprennent un enroulement d'induction chacun, associés au respectif noyau à réchauffer

5. l'appareil (200) selon au moins la définition 3 en plus comprend :
Un conduit (24) d'aspiration du comburent éthylique, gazeux ou vapeur ionisée ;
Un générateur de plasma associé opérationnellement au conduit d'aspiration qui consente d'ioniser la vapeur ou le comburent

6. le système (300) pour la génération de l'énergie comprend :
Un appareil (100, 200, 400) pour la production de l'hydrogène gazeux ;
Un appareil qui utilise du surnommé hydrogène gazeux pour produire l'énergie **caractérisé par le fait que** l'appareil (100, 200, 400) pour la production de l'hydrogène gazeux est réalisé selon au moins l'une des précédentes définitions.

7. le système selon la définition 7, ou le dit appareil d'utilise comprend au moins l'un des dispositifs suivants : un moteur, une turbine pour la génération de l'énergie motrice, une motrice thermodynamique, un co- générateur, un brûleur.
